# EUROPÄISCHE PATENTSCHRIFT

(11) **EP 0 882 953 B1**
(45) Veröffentlichungstag und Bekanntmachung des Hinweises auf die Patenterteilung: **26.04.2006**
(21) Anmeldenummer: 98109149.9
(22) Anmeldetag: 20.05.1998
(51) Int. Cl.: G01F 15/06, H02K 49/10

(54) **Magnetkupplung für Wasserzähler mit Schutz gegen äussere Störmagnetfelder**
Magnetic coupling for water meter with protection against external magnetic fields
Accouplement magnétique pour compteur d'eau pourvu d'une protection contre les champs magnétiques extérieurs

(30) Priorität: 04.06.1997 DE 19723364
(43) Veröffentlichungstag der Anmeldung: 09.12.1998
(73) Patentinhaber: Hydrometer GmbH, D-91522 Ansbach (DE)
(72) Erfinder: Eff, Ulrich, 91567 Herrieden (DE); Buckl, Roland, 91722 Arberg (DE); Zellner, Claus, 91623 Sachsen b.A. (DE); Ibel, Karl-Heinz, 91522 Ansbach (DE)
(74) Vertreter: Blaumeier, Jörg

(56) Entgegenhaltungen:
- EP-A- 0 516 509
- WO-A-96/06480
- CH-A- 426 290
- US-A- 3 093 307

## Beschreibung

Die Erfindung bezieht sich auf eine Magnetkupplung für Wasserzähler od.dgl. mit zwei beidseits einer Trennwand zwischen dem Meßteil und dem Auswerte- und Anzeigeteil rotierenden Magneten, wobei die Magnete von Magnetschutzringen umgeben und auf der dem jeweiligen Gegen-Kupplungsteil abgelegenen Seite durch Magnetschutzscheiben überdeckt sind.

Wasserzähler mit Magnetkupplung lassen sich durch starke Magnete in ihrer Meßgenauigkeit beeinflussen, wobei bei bestimmten Typen dies bis zum völligen Anhalten des Zählwerks gehen kann. Da in der Praxis nicht auszuschließen ist, daß Wasserzähler auch häufiger an Orten eingebaut werden müssen, an denen stärkere Magnetfelder herrschen, besteht ein entsprechendes Bedürfnis, die Magnetkupplungen gegenüber solchen Störmagnetfeldern abzuschirmen. Hierzu sind bereits eine Reihe von Vorschlägen gemacht worden.

So hat man bisher in solchen Fällen häufig das Wasserzählergehäuse aus Stahl gefertigt, was jedoch den Nachteil hat, daß solche Stahlgehäuse im Vergleich zu den bevorzugten und auch leichter zu bearbeitenden Messinggehäusen sehr viel teurer sind. Ein anderer Lösungsvorschlag bestand darin, das Wasserzählergehäuse sehr groß zu machen, so daß der Abstand der Magnetkupplung zum au-βerhalb des Gehäuses liegenden Störmagneten ebenfalls sehr groß wird. Dies führt aber zum einen zu teuren Anordnungen, wobei noch hinzu kommt, daß solche großvolumige Zählerabmessungen nicht in Standard-Einbausituationen einsetzbar sind. Schließlich hat man auch bereits einen Magnetschutzring vorgeschlagen, der jedoch keinen optimalen Schutz von allen Seiten schaffen konnte.

Aus der CH 426 290 ist bereits ein Meßgerät der eingangs genannten Art mit einer Magnetkupplung bekannt geworden, bei welchem durch die Magnete der Kupplung umgebenden Magnetschutzringe und die stirnseitigen Magnetschutzscheiben ein Schutz gegen äußere Störfelder erzielt ist.

Der Erfindung liegt daher die Aufgabe zugrunde, eine Magnetkupplung der eingangs genannten Art so auszugestalten, daß neben einer einfachen Abschirmung gegen äußere Störmagnetfelder eine erhöhte Kupplungskraft der Magnete gegeben ist.

Zur Lösung dieser Aufgabe ist erfindungsgemäß vorgesehen, daß die Magnetschutzscheiben als Rückschlußscheiben ausgebildet sind und daß die Magnetschutzringe aus einem Material bestehen, das das Entstehen induzierter Wirbelströme verhindert.

Durch die Kombination eines Magnetschutzrings mit zwei Rückschtußscheiben läßt sich - bevorzugt sollen die Rückschlußscheiben im wesentlichen in der Stimebene der Magnetschutzringe liegen - zum einen eine vollständige Entkopplung der Magnetkupplung gegen äußere Störfelder sowohl in horizontaler als auch in vertikaler Richtung erzielen. Es ergibt sich durch die Rückschlußscheiben auch zusätzlich eine erhöhte Kupplungskraft und dadurch erhöht sich das übertragbare Drehmoment. Bei der CH 426 290 induzieren die Magnete, wenn sie nahe an den Magnetschutzscheiben liegen, wechselnde Magnetfelder, die zu einer Bremsung führen.

Üblicherweise werden bislang Magnetschutzringe aus weichmagnetischem Eisen gefertigt, so daß sie elektrisch leitfähig sind. Dies wiederum führt dazu, daß der Abstand der Magnetschutzringe zur Magnetkupplung groß gewählt werden muß, um die Wirbelströme klein zu halten. Dadurch wiederum wird das Volumen vergrößert und damit die Kosten für die Magnetschutzringe erhöht. Schließlich ist ein weiterer Nachteil darin zu sehen, daß der Spalt zwischen Rückschlußscheibe und Magnetschutzring groß ist und damit die Schutzwirkung für die Magnetkupplung gegen äußere Störmagnetfelder kleiner ist.

Diese Schwierigkeiten beseitigt die Erfindung dadurch, daß die Magnetschutzringe aus einem Material bestehen, das das Entstehen induzierter Wirbelströme verhindert, was entweder in der Weise erfolgen kann, daß ein weichmagnetischer Ferrit verwendet wird, oder aber daß diese Bauteile aus geschichteten, gegeneinander isolierten Trafoblechen bestehen.

Durch dieses gezielte Verhindern des Entstehens von Wirbelströmen läßt sich die Schutzwirkung auf die Magretkupplung gegen äußere Störmagnetfelder durch den möglichen kleineren Abstand des Magnetschutzrings zur Magnetkupplung erheblich verbessern. Darüber hinaus ergibt sich eine nicht unbeträchtliche Kosteneinsparung durch kleineres Volumen bzw. weniger Materialverbrauch.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen schematischen Schnitt durch eine erfindungsgemäße Magnetkupplung,
- Fig. 2 und 3: Aufsichten auf zwei Ausführungsformen der bei der Magnetkupplung nach Fig. 1 eingesetzten Ringmagnete, und
- Fig. 4: einen der Fig. 1 entsprechenden Schnitt durch eine zweite Ausführungsform einer erfindungsgemäßen Magnetkupplung.

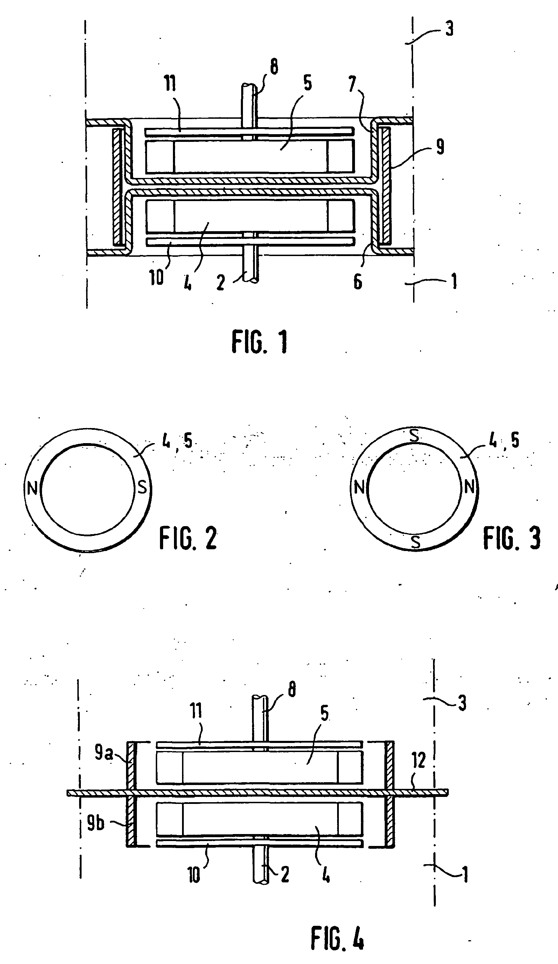

Die erfindungsgemäße Magnetkupplung nach Fig. 1 ist zwischen dem Meßteil 1, in dem beispielsweise ein mit der Welle 2 verbundenes Flügelrad rotierend von der zu messenden Flüssigkeit angetrieben wird, und dem Zählwerk 3 eines ansonsten nicht gezeigten Wasserzählers angeordnet. Der Ringmagnet 4 ist unter dem gestuften Deckel 6 des Hydraulikteils, also des Meßteils 1, angeordnet, während der Ringmagnet 5 über der in gleicher Weise gestuft ausgebildeten Bodenwand 7 des Zählwerks gelagert ist. Der vom Flügelrad angetriebene Ringmagnet 4 nimmt den Ringmagneten 5 mit und treibt über dessen Lagerwelle 8 das Zählwerk des Wasserzählers an.

Zur Abschirmung der Magnetkupplung gegen horizontale und vertikale äußere Störmagnetfelder ist zum einen ein Magnetschutzring 9 um die Ringmagnete 4 und 5 angeordnet. Zum anderen sind die Ringmagnete 4 und 5 auf der dem jeweiligen Gegenmagneten abgelegenen Seite von einer Rückschlußscheibe 10 bzw. 11 überdeckt. Die Rückschlußscheiben 10 und 11 liegen dabei im wesentlichen in den freien Stirnebenen des Magnetschutzrings 9. Die Ausführungsform gemäß Fig. 4 unterscheidet sich von der nach Fig. 1 dadurch, daß nur eine eben durchgehende Trennwand 12 zwischen dem Meßteil 1 und dem Zählwerk 3 angeordnet ist. Diese Ausbildung verhindert die bei den abgestuften Ausbildungen des Deckels 6 und des Bodens 7 mögliche Anordnung eines durchgehenden Magnetschutzrings 9. Bei der Ausführungsform nach Fig. 4 sind deshalb zwei getrennte Magnetschutzringe 9a und 9b beideseits der Trennwand 12 vorgesehen. Im übrigen ist der Aufbau der Ausführungsbeispiele nach den Figuren 1 und 2 gleich.

Der Magnetschutzring 9 besteht bevorzugt entweder aus einem weichmagnetischen Ferrit oder aus geschichteten, gegeneinander isolierten Trafoblechen. Durch die Verwendung eines weichmagnetischen Ferrits, der nicht bzw. nur sehr schlecht elektrisch leitfähig ist, können sich keine durch Induktion bewirkte Wirbelströme im Magnetschutzring aufbauen und auch bei der Variante eines Magnetschutzrings aus geschichteten Trafoblechen können durch die elektrische Isolierung der Trafobleche gegeneinander keine Wirbelströme auftreten.

## Patentansprüche

1. Magnetkupplung für Wasserzähler od.dgl. mit zwei beidseits einer Trennwand zwischen dem Meßteil und dem Auswerte- und Anzeigeteil rotierenden Magneten, wobei die Magnete von Magnetschutzringen umgeben und auf der dem jeweiligen Gegen-Kupplungsteil abgelegenen Seite durch Magnetschutzscheiben überdeckt sind, **dadurch gekennzeichnet, daß** die Magnetschutzscheiben als Rückschlußscheiben (10, 11) ausgebildet sind und daß die Magnetschutzringe aus einem Material bestehen, das das Entstehen induzierter Wirbelströme verhindert.

2. Magnetkupplung nach Anspruch 1, **dadurch gekennzeichnet, daß** die Magnetschutzringe aus weichmagnetischem Ferrit bestehen.

3. Magnetkupplung nach Anspruch 1, **dadurch gekennzeichnet, daß** die Magnetschutzringe aus geschichteten, gegeneinander isolierten Trafoblechen bestehen.

4. Magnetkupplung nach einem der Ansprüche 1 bis 3, **dadurch gekennzeichnet, daß** der Magnetschutzring (9) die gestufte Deckwand (6) des Meßteils (1) und die gestufte Bodenwand (7) des Zählwerks (3) umgibt.

5. Magnetkupplung nach einem der Ansprüche 1 bis 3, **dadurch gekennzeichnet, daß** zwei Magnetschutzringe (9a, 9b) beideseits einer gemeinsamen Trennwand (12) des Meßteils (1) und des Zählwerks (3) vorgesehen sind.

6. Magnetkupplung nach einem der Ansprüche 1 bis 5, **dadurch gekennzeichnet, daß** die Rückschlußscheiben (10. 11) im wesentlichen in der Stirnebene der Magnetschutzringe (8, 9) liegen.

## Claims

1. Magnetic coupling for water meter or the like with two magnets rotating on either side of a partition wall between the measuring part and the evaluation and display part, the magnets being surrounded by magnetic protection rings and being covered by magnetic protection discs on the side remote from the respective counter-coupling part, **characterised in that** the magnetic protection discs are formed as conclusion discs (10,11) and **in that** the magnetic protection rings consist of a material which prevents the occurrence of induced eddy currents.

2. Magnetic coupling according to claim 1, **characterised in that** the magnetic protection rings consist of soft-magnetic ferrite.

3. Magnetic coupling according to claim 1, **characterised in that** the magnetic protection rings consist of coated transformer plates which are insulated from one another.

4. Magnetic coupling according to one of claims 1 to 3, **characterised in that** the magnetic protection ring (9) surrounds the stepped upper wall (6) of the measuring part (1) and the stepped base wall (7) of the counter (3).

5. Magnetic coupling according to one of claims 1 to 3, **characterised in that** two magnetic protection rings (9a, 9b) are provided on either side of a common partition wall (12) of the measuring part (1) and the counter (3).

6. Magnetic coupling according to one of claims 1 to 5, **characterised in that** the conclusion discs (10, 11) lie substantially in the end plane of the magnetic protection rings (8, 9).

## Revendications

1. Accouplement magnétique pour compteur d'eau ou analogue, du type comportant deux aimants tournants situés chacun d'un côté d'une cloison séparant la portion soumise à la mesure et la portion effectuant et indiquant la mesure, les aimants étant entourés par des bagues de protection magnétique et recouverts sur chacun des côtés de la contre-portion de l'accouplement magnétique par des disques de protection magnétique, **caractérisé en ce que** les disques de protection magnétique sont constitués par des disques de fermeture arrière (10, 11), et **en ce que** les bagues de protection magnétique sont réalisées en un matériau qui empêche que prennent naissance des courants induits tourbillonnaires.

2. Accouplement magnétique selon la revendication 1, **caractérisé en ce que** les bagues de protection magnétique sont réalisées en une ferrite à magnétisme doux.

3. Accouplement magnétique selon la revendication 1, **caractérisé en ce que** les bagues de protection magnétique sont réalisées en feuilles de tôle pour transformateurs (« Trafobleche») isolées l'une de l'autre.

4. Accouplement magnétique selon l'une quelconque des revendications 1 à 3, **caractérisé en ce que** la bague de protection magnétique (9) entoure la paroi latérale en gradins (6) de la portion soumise à la mesure (1) et la paroi de fond en gradins (7) du compteur (3).

5. Accouplement magnétique selon l'une quelconque des revendications 1 à 3, **caractérisé en ce que** sont prévues deux bagues de protection magnétique (9a, 9b) situées des deux côtés d'une paroi commune (12) séparant la portion de mesure (1) et le compteur (3).

6. Accouplement magnétique selon l'une quelconque des revendication à 1 à 5, **caractérisé en ce que** les disques de fermeture arrière (10, 11) sont placés pratiquement dans le plan frontal des bagues de protection magnétique (8, 9).
